# EUROPÄISCHE PATENTSCHRIFT

(11) **EP 2 003 912 B1**
(45) Veröffentlichungstag und Bekanntmachung des Hinweises auf die Patenterteilung: **10.11.2010**
(21) Anmeldenummer: 07110231.3
(22) Anmeldetag: 14.06.2007
(51) Int. Cl.: H04W 12/02

(54) **Verfahren zur Speicherung und Kontrolle der in einem digitalen Funknetz übertragenen Daten**
Method for storing and monitoring data transmitted in a digital wireless network
Procédé destiné à l'enregistrement et au contrôle des données transmises dans un réseau radio numérique

(43) Veröffentlichungstag der Anmeldung: 17.12.2008
(73) Patentinhaber: Siemens Aktiengesellschaft Österreich, 1210 Wien (AT)
(72) Erfinder: Kemen, Stanislav, 85101 Bratislava (SK); Knöbl, Karl, 1210 Wien (AT); Vizaei, Mohammad, 1220 Wien (AT)

(56) Entgegenhaltungen:
- EP-A- 0 729 284
- WO-A-99/39492
- WO-A-2006/111357
- "Terrestrial Trunked Radio (TETRA); Security; Lawful Interception (LI) interface; ETSI EN 301 040" ETSI STANDARDS, EUROPEAN TELECOMMUNICATIONS STANDARDS INSTITUTE, SOPHIA-ANTIPO, FR, Bd. TETRA-6, Nr. V211, März 2006 (2006-03), XP014033804 ISSN: 0000-0001

## Beschreibung

### Technisches Gebiet

Die Erfindung betrifft ein Verfahren zur Speicherung und Kontrolle der in einem digitalen TETRA-Funknetz übertragenen Daten.

### Stand der Technik

Die in Einsatz befindlichen analogen Funknetze von Behörden und Organisationen mit Sicherheitsaufgaben (BOS Funknetze) werden durch digitale Funknetze ersetzt. Am häufigsten eingesetzt wird dabei das sogenannte TETRA-System (Terrestrial Trunked Radio). TETRA ist ein Standard für digitalen Bündelfunk, der sich wegen seiner Leistungsmerkmale besonders für Behörden und Organisationen mit Sicherheitsaufgaben eignet.

TETRA wurde von der ETSI (ETSI: Europäisches Institut für Telekommunikationsnormen) standardisiert, die erste Version dieses Standards entstand 1995.

TETRA ist als Zeitmultiplex-System mit vier unabhängigen Kommunikationskanälen pro Träger definiert. Der Abstand zwischen den einzelnen Trägern beträgt 25kHz. Gegenüber analogem Bündelfunk bedeutet das eine bessere Frequenznutzung. TETRA-Systeme bieten gegenüber GSM-Netzen, die bei 200 kHz Kanalabstand acht Kommunikationskanäle bereitstellen, die vierfache Frequenznutzung.

Dennoch findet auch ein Frequenzmultiplex statt, durch die Paarung jedes HF-Kanals in eine uplink-und eine downlink-Frequenz womit eine hohe Kanalkapazität erreicht wird.

TETRA Netze bestehen, ähnlich wie zellulare Mobilfunknetze, aus Basisstationen mit ihnen zugeordneten Antennen, Vermittlungseinrichtung (Switches), welche die Vermittlung der Verbindungen vornehmen, Kontrollzentralen, welche Überwachungs- und Steuerungsaufgaben wahrnehmen und Endgeräten.

In TETRA Netzen ist neben der Sprachübertragung auch das Übermitteln von Textnachrichten (SDS Short Data Service, standardisiert in EN 300 392-2) möglich. Bestimmte Endgeräte können mehrere Übertragungskanäle gleichzeitig nutzen und dadurch höhere Übertragungsraten erreichen, wodurch beispielsweise eine Bildübertragung beschleunigt wird.

TETRA zeichnet sich weiters durch eine hocheffiziente Komprimierung von Sprachdaten aus, der TETRA Komprimierungsalgorithmus (standardisiert in EN 300 395-2) liefert eine Datenrate von 4,567kBit/s.

In BOS Funknetzen ist oft eine Speicherung der übertragenen Daten (Sprache, Daten und SDS), bzw. das kontinuierliche Mithören (Monitoring) der Übertragungen einzelner Endgeräte oder Gruppen von Endgeräten erforderlich. Dazu wird üblicherweise ein Aufzeichnungsgerät an die Kontrollzentrale angeschlossen, welche die gewünschten Daten aufzeichnet und auf Anforderung wiedergibt. Gemäß dem Stand der Technik ist dazu die Übertragung des Datenverkehrs an die

Kontrollzentrale erforderlich, wobei für diese Übertragung sogenannte E1-Leitungen verwendet werden. Die Anmietung und der Betrieb solcher E1-Leitungen sind allerdings sehr teuer.

Die Problematik des Mithörens von IP-Verbindungen in Kommunikationsnetzen (IMS IP-based Multimedia Subsystem) wird in WO2006/111357A1 gelöst, da übliche Verfahren dabei nicht zur Anwendung kommen können.

Eine mobile Abhörmöglichkeit offenbart WO99/39492. Darin wird ein abzuhörendes Signal an ein Mobilfunknetz weitergeleitet, wodurch es möglich wird, ein bestimmtes Signal mobil abzuhören.

EP-A-0 729284 zeigt das gebräuchliche Verfahren zur Schaffung einer Abhörmöglichkeit in Kommunikationsnetzen, welches eine fernsteuerbare Aufzeichnungseinrichtung vorsieht um bestimmte Nutzkanäle aufzuzeichnen.

### Darstellung der Erfindung

Der Erfindung liegt daher die Aufgabe zugrunde, ein Verfahren zur Speicherung und Kontrolle der in einem digitalen Funknetz übertragenen Daten anzugeben.

Die Aufgabe wird durch ein Verfahren mit den Merkmalen des Anspruchs 1 gelöst. Vorteilhafte Ausgestaltungen sind Gegenstand von abhängigen Ansprüchen.

Dem Grundgedanken der Erfindung zufolge wird jeder Vermittlungseinrichtung ein Aufzeichnungsgerät zugeordnet, wodurch die Übertragung der Nutzdaten des digitalen Funknetzes von der Vermittlungseinrichtung zur Kontrollzentrale über eine von dem Datenkanal (im Allgemeinen eine IP (Internet Protokoll) Verbindung), welcher zur Steuerung des digitalen Funknetzes dient, getrennte Verbindung (im Allgemeinen eine sogenannte PCM30-Verbindung, bzw. E1-Leitung) entfällt.

PCM30-Verbindungen (oder auch E1-Leitungen genannt) sind ein weltweiter Übertragungsstandard der Plesiochronen Digitalen Hierarchie (PDH) mit einer Bitrate von 2Mbit/s und dienen als Basis für die meisten Übertragungsstrecken in der digitalen Telefonie.

Erfindungsgemäß wird von der Kontrollzentrale ausgehend gesteuert, welche Verbindungen bzw. welche Nutzdaten des digitalen Funknetzes aufgezeichnet werden sollen. Ebenso steuert die Kontrollzentrale, welche Verbindungen bzw. welche Nutzdaten des digitalen Funknetzes unmittelbar an die Kontrollzentrale geleitet werden. Dadurch ist es der Kontrollzentrale möglich jedes beliebige Gespräch innerhalb des digitalen Funknetzes mitzuhören bzw. SDS Übertragungen zugestellt zu bekommen.
Die im Aufzeichnungsgerät gespeicherten Nutzdaten (Sprachdaten oder digitale Daten) können von der Kontrollzentrale vom Aufzeichnungsgerät zu beliebigen Zeitpunkten abgefragt werden.

Erfindungsgemäß wird zur Steuerung der Datenaufnahme und zur Übertragung der gespeicherten Daten und zum Mithören von Verbindungen der Übertragungskanal verwendet, welcher auch zur allgemeinen Steuerung des digitalen Funknetzes verwendet wird. Dadurch kann der Vorteil erzielt werden, dass die zusätzliche Verbindung zwischen einer Vermittlungseinrichtung und einer Kontrollzentrale (beispielsweise eine PCM30 Leitung) entfallen kann.

Eine besonders vorteilhafte Eigenschaft der Erfindung ist es, dass die Vermittlungseinrichtung einfacher und kostengünstiger gestaltet werden kann, da die sonst erforderlichen Einrichtungen zur Übertragung der Nutzdaten von der Vermittlungseinrichtung zur Kontrollzentrale entfallen können. Im Fall eines typischen TETRA Netzwerks können beispielsweise in jeder Vermittlungseinrichtung und in der Kontrollzentrale die sonst erforderlichen ISDN-Schnittstellen, TETRA-Vocoder und PCM30-Einrichtungen entfallen.

Eine weitere vorteilhafte Eigenschaft der Erfindung ist es, dass Sprachdaten unmittelbar in jener Kodierung aufgezeichnet werden, welche das digitale Funknetz einsetzt. Im Fall eines TETRA Netzwerks kann somit unmittelbar die mit dem TETRA Komprimierungsalgorithmus kodierte Sprache aufgezeichnet werden. Aufgrund der hocheffizienten Komprimierung des TETRA Komprimierungsalgorithmus ist somit die aufzuzeichnende Datenmenge wesentlich geringer als beispielsweise bei der Aufzeichnung eines ISDN Sprachkanals.

Die Übertragung der aufgezeichneten oder der zeitgleich mitzuhörenden Nutzdaten von der Vermittlungseinrichtung an die Kontrollzentrale erfolgt über den Datenkanal, welcher auch zur allgemeinen Steuerung des TETRA Netzes eingesetzt wird. Für die Sprachübertragung ist es zweckmäßig jeweils eine VoIP (Voice over IP) Einrichtung in der Kontrollzentrale und in der Vermittlungseinrichtung vorzusehen.

Das erfindungsgemäße Verfahren ermöglicht es, neben Sprachverbindungen auch alle anderen Nutzdaten aufzuzeichnen und beliebig wiederzugeben bzw. zeitgleich mitzuhören. Dazu enthalten sowohl die Kontrollzentrale als auch die Aufzeichnungseinrichtung Mittel um aufgezeichnete Daten auf Anforderung anzufordern bzw. wiederzugeben.

Neben Sprachverbindungen sind in einem TETRA Netzwerk die Übertragung von SDS Nutzdaten sowie von Circuit-Mode (kanalvermittelten Daten) und Packet-Mode Daten (Packetvermittelten Daten) vorgesehen. Das erfindungsgemäße Verfahren ermöglicht es auch diese Daten aufzuzeichnen und wiederzugeben.

### Kurzbesehreibung der Zeichnungen

Es zeigen beispielhaft:
**Fig. 1** TETRA Netz mit Aufzeichnungseinrichtung gemäß dem Stand der Technik.
**Fig. 2** TETRA Netz mit erfindungsgemäßer Integration der Aufzeichnungseinrichtung.

### Ausführung der Erfindung

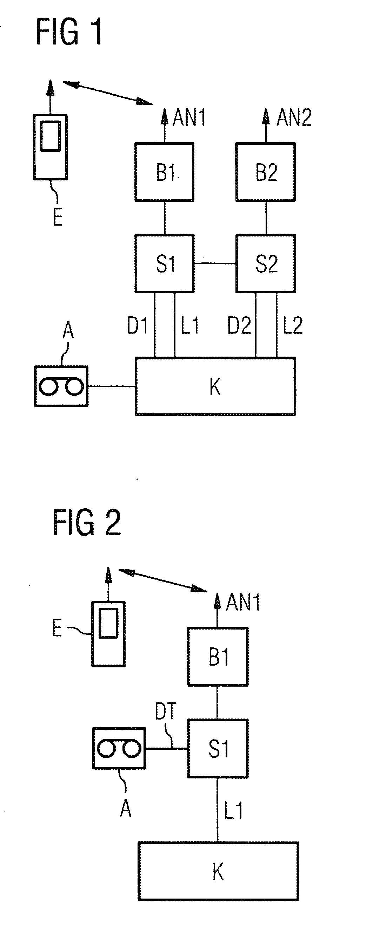

**Fig. 1** zeigt beispielhaft und schematisch ein digitales Funknetz (TETRA Netz) gemäß des Standes der Technik. Die mobilen Endgeräte (E) (in Fig. 1 ist nur ein Endgerät dargestellt) kommunizieren über die den Basisstationen (B1, B2) zugeordneten Antennen (AN1, AN2) und über die Basisstationen (B1, B2) mit den Vermittlungseinrichtungen (S1, S2) und weiter zu dem gewünschten Verbindungspartner, z.B. einem weiteren Endgerät oder der Kontrollzentrale oder über eine (nicht dargestellte) Verbindungsvermittlung zu einem Anschluss im öffentlichen Telephonnetz. Die Anzahl an Basisstationen (B) und Vermittlungseinrichtungen (S) ist von der erforderlichen Größe des TETRA Netzes abhängig. Im gegenständlichen Beispiel sind je 2 Basisstationen (B1, B2) und 2 Vermittlungseinrichtungen (S1, S2) dargestellt. Jede Vermittlungseinrichtung (S) ist mittels einer Datenleitung (D) und einer Steuerleitung (L) mit der Kontrollzentrale (K) verbunden. An die Kontrollzentrale ist ein Aufzeichnungsgerät (A) angeschlossen.

**Fig. 2** zeigt beispielhaft und schematisch die Darstellung des Einsatzes des erfindungsgemäßen Verfahrens am Beispiel eines TETRA Netzes. Es ist ein gegenüber Fig. 1 vereinfachtes TETRA Netz dargestellt, wobei nur jeweils eine Basisstation (B1) und eine Vermittlungseinrichtung (S1) vorgesehen sind. Die Kontrollzentrale (K) ist über die Steuerleitung (L1) an die Vermittlungseinrichtung (S1) angebunden.
Eine Aufzeichnungseinrichtung (A) ist über die Aufzeichnungsdatenleitung (DT) an die Vermittlungseinrichtung (S1) angebunden. Die Kontrollzentrale (K) steuert die Vermittlungseinrichtung (S1) über die Steuerleitung (L1) in einer Weise an, dass die Vermittlungseinrichtung (S1) jene Nutzdaten, welche von der Kontrollzentrale (K) zum zeitgleichen Mithören angefordert, oder zur Aufzeichnung in der Aufzeichnungseinrichtung (A) vorgesehen sind über die Datenleitung (L1) an die Kontrollzentrale (K) übermittelt oder, im Fall das die Nutzdaten aufgezeichnet werden sollen, über die Aufzeichnungsdatenleitung an die Aufzeichnungseinrichtung (A) übermittelt. Zur Übertragung der Nutzdaten von der Vermittlungseinrichtung (S1) über die Datenleitung (L1) an die Kontrollzentrale (K) wird der gleiche Übertragungsweg eingesetzt welcher auch zur allgemeinen Steuerung des TETRA Netzes durch die Kontrollzentrale (K) verwendet wird.

Die Kontrollzentrale (K), die Aufzeichnungseinrichtung (A) und die Vermittlungseinrichtung (S1) enthalten jeweils Mittel um in der Aufzeichnungseinrichtung (A) aufgezeichnete Nutzdaten zu beliebigen Zeitpunkten an die Kontrollzentrale (K) zu übermitteln und um in der Aufzeichnungseinrichtung (A) aufgezeichnete Nutzdaten zu löschen.
Die Aufzeichnungsdatenleitung (DT) überträgt die aufzuzeichnenden und die wiederzugebenden Nutzdaten zwischen der Vermittlungseinrichtung (S1) und der Aufzeichnungseinrichtung (A).

### Liste der Bezeichnungen

- B1, B2,: Basisstation(en)
- AN1, AN2: Antennen
- E: Endgerät
- S1, S2,: Vermittlungseinrichtung(en)
- K: Kontrollzentrale
- A: Aufzeichnungseinrichtung
- D1, D2,: Datenleitung(en)
- L1, L2,: Steuerleitung(en)
- DT: Aufzeichnungsdatenleitung

## Patentansprüche

1. Verfahren zur Speicherung und Kontrolle der in einem digitalen TETRA-Funknetz übertragenen Daten, wobei das TETRA-Funknetz zumindest eine Basisstation (B1), eine Vermittlungseinrichtung (S1) und eine Kontrollzentrale (K) umfasst, und die Vermittlungseinrichtung (S1) ausschließlich mittels eines Datenkanals (L1) an die Kontrollzentrale (K) angebunden ist,
**wobei** jeder Vermittlungseinrichtung (S1) ein Aufzeichnungsgerät (A) zugeordnet ist und die Kontrollzentrale (K) die Steuerung einer Aufzeichnung der in dem digitalen TETRA-Funknetz übertragenen Daten über den Datenkanal (L1) vornimmt, und wobei auf Anforderung der Kontrollzentrale (K) die im Aufzeichnungsgerät (A) aufgezeichneten Daten über diesen Datenkanal (L1) zur Kontrollzentrale (K) geleitet werden.

2. Verfahren gemäß Anspruch 1, **dadurch gekennzeichnet, dass** die Übertragung der Daten über den Datenkanal (L1) mittels Internet Protokoll durchgeführt wird.

3. Verfahren gemäß Anspruch 1, **dadurch gekennzeichnet, dass** ein zeitgleiches Mithören jeder über die Vermittlungseinrichtung (S1) geleiteten Sprachverbindung durch die Kontrollzentrale (K) ermöglicht wird.

## Claims

1. Method for storing and monitoring data transferred in a TETRA digital radio network, wherein the TETRA radio network comprises at least one base station (B1), a switch (S1) and a control centre (K) and the switch (S1) is connected to the control centre (K) exclusively by means of a data channel (L1), **wherein** each switch (S1) is assigned a recording device (A) and the control centre (K) handles the control of a recording of the data transferred in the TETRA digital radio network by way of the data channel (L1), and wherein at the request of the control centre (K) the data recorded in the recording device (A) is routed to the control centre (K) via said data channel (L1).

2. Method according to claim 1, **characterised in that** the transmission of the data over the data channel (L1) is performed using the Internet Protocol.

3. Method according to claim 1, **characterised in that** simultaneous monitoring by the control centre (K) of each voice connection routed via the switch (S1) is made possible.

## Revendications

1. Procédé d'enregistrement et de contrôle des données transmises dans un réseau radio numérique TETRA, le réseau radio TETRA comprenant au moins une station de base (B1), un dispositif de commutation (S1) et une centrale de contrôle (K) et le dispositif de commutation (S1) étant relié à la centrale de contrôle (K) exclusivement au moyen d'un canal de données (L1), un appareil d'enregistrement (A) étant associé à chaque dispositif de commutation (S1) et la centrale de contrôle (K) opérant la commande d'un enregistrement des données transmises dans le réseau radio numérique TETRA via le canal de données (L1) et les données enregistrées dans l'appareil d'enregistrement (A) étant acheminées vers la centrale de contrôle (K) via ce canal de données (L1) sur demande de la centrale de contrôle (K).

2. Procédé selon la revendication 1, **caractérisé en ce que** la transmission des données est effectuée via le canal de données (L1) au moyen du protocole Internet.

3. Procédé selon la revendication 1, **caractérisé en ce qu'**une écoute simultanée de chaque liaison vocale acheminée via le dispositif de commutation (S1) est rendue possible par la centrale de contrôle (K).
